(19) **Europäisches Patentamt**
**European Patent Office**
**Office européen des brevets**

(11) **EP 2 960 763 A1**

(12) **EUROPEAN PATENT APPLICATION**

(43) Date of publication:
**30.12.2015 Bulletin 2015/53**

(51) Int Cl.:
***G06F 3/0481*** (2013.01)

(21) Application number: **15173433.2**

(22) Date of filing: **23.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.06.2014 US 201462016641 P**

(71) Applicant: **Google Inc.**
**Mountain View, CA 94043 (US)**

(72) Inventor: **Jitkoff, John Nicholas**
**Mountain View, CA California 94043 (US)**

(74) Representative: **Robinson, David Edward Ashdown**
**Marks & Clerk LLP**
**1 New York Street**
**Manchester M1 4HD (GB)**

(54) **COMPUTERIZED SYSTEMS AND METHODS FOR CASCADING USER INTERFACE ELEMENT ANIMATIONS**

(57)     Systems, methods, and computer-readable media are provided for generating a cascaded animation in a user interface. In accordance with one implementation, a method is provided that includes operations performed by at least one processor, including determining coordinates and an initial time for an input to the user interface. The method may also include identifying at least one user interface element capable of being animated. Additionally, the method may determine coordinates for the at least one user interface element corresponding to the spatial location of the at least one user interface element in the user interface. The method also may include calculating a target time based on the initial time and distance between the coordinates of the input and the coordinates of the at least one user interface element. The method may generate a command to animate the display of the at least one user interface element when the target time is reached.

FIG. 1

**Description**

FIELD

Embodiments described herein relate to a computer-implemented system and method for generating a cascaded animation in a user interface.

BACKGROUND INFORMATION

The present disclosure relates generally to the field of user interfaces and computerized animation of elements. More particularly, and without limitation, the present disclosure described embodiments of methods, systems, and computer readable media for cascading user interface element animations. Traditional computing devices include user interface and input combinations that provide users with a combination of tactile and visual feedback. This combination provides users with reliable, certain, consistent, and familiar interaction with computing devices. For example, a user may slide a mouse, and the computing device will depict a pointer moving on a monitor. Other traditional examples include a user pressing a combination of keys on a keyboard, causing the computing device to shift focus to a different application (e.g., pressing "Alt" and "Tab").

However, some devices lack the tactile input mechanisms found in traditional computing devices. For example, smartphones and tablet computers have few, if any, physical buttons and primarily rely on a touch screen to facilitate user input and interactions. Unlike traditional computing devices, touchscreens do not include constant input tracking or tactile feedback provided by, for example, a mouse or mechanical keyboard.

SUMMARY

In accordance with embodiments of the present disclosure, computer-implemented systems, methods, and computer-readable media are provided for generating a cascaded animation in a user interface.

In accordance with one embodiment, a computerized method is provided for generating a cascaded animation in a user interface. The method comprises operations performed by at least one processor, including determining coordinates and an initial time for an input to the user interface. The method may also include identifying at least one user interface element capable of being animated. Additionally, the method may determine coordinates for the at least one user interface element corresponding to the spatial location of the user interface element in the user interface. The method also may include calculating a target time based on the initial time and distance between the coordinates of the input and the coordinates of the at least one user interface element. The method may generate a command to animate the display of the at least one user interface element when the target time is reached.

In an embodiment, the target time may be further based on the size of the user interface. The command to animate may include a command to display an alternate design for the at least one user element. Additionally, the input may include a user tapping a touchscreen.

In an embodiment, the method may also include calculating a direction from the coordinates of the input to the coordinates of the at least one user element. The command may further animate the display of the at least one user element based on the direction.

In an embodiment, the commands may be generated responsive to a determination that the at least one user element is not flagged for non-animation.

In another embodiment, the coordinates of the at least one user interface element may correspond to the centroid of the at least one user interface element.

In some embodiments, the command includes a command for displaying a ripple effect on the user interface prior to animating the display of the at least one user interface element.

Computer-readable media and systems are also provided in this disclosure for generating a cascaded animation in a user interface. Additional embodiments and related features of the present disclosure are described herein.

In one embodiment, there is provided a computer-implemented system for generating a cascaded animation in a user interface, comprising: a memory device that stores instructions; and at least one processor that executes the instructions to: determine coordinates and an initial time for an input to the user interface, wherein the coordinates correspond to a spatial location of the input and the time corresponds to when the input was received; identify at least one user interface element capable of being animated; determine coordinates for the at least one user interface element corresponding to a spatial location of the at least one user interface element in the user interface; calculate a target time based on the initial time and distance between the coordinates of the input and the coordinates of the at least one user interface element; and generate a command to animate the display of the at least one user interface element when the target time is reached.

In some embodiments of the computer implemented system, the target time is further based on the size of the user interface.

In some embodiments of the computer implemented system, the command to animate comprises a command to display an alternate design for the at least one user interface element.

In some embodiments of the computer implemented system, the input comprises a user tapping a touchscreen.

In some embodiments of the computer-implemented system, the instructions further cause the processor to: calculate a direction from the coordinates of the input to the coordinates of the at least one user interface element; and wherein the command further animates the display of the at least one user interface element based on the direction.

In some embodiments of the computer-implemented system, the command is generated responsive to a determination that the at least one user interface element is not flagged for non-animation.

In some embodiments of the computer implemented system, the coordinates of the at least one user interface element correspond to a centroid of the at least one user interface element.

In some embodiments of the computer implemented system, the command includes a command for displaying a ripple effect on the user interface prior to animating the display of the at least one user interface element.

In another embodiment, there is provided a non-transitory, computer-readable medium storing instructions, the instructions configured to cause at least one processor to perform operations comprising: determine coordinates and an initial time for an input to the user interface, wherein the coordinates correspond to a spatial location of the input and the time corresponds to when the input was received; identify at least one user interface element capable of being animated; determine coordinates for the at least one user interface element corresponding to a spatial location of the at least one user interface element in the user interface; calculate a target time based on the initial time and distance between the coordinates of the input and the coordinates of the at least one user interface element; and generate a command to animate the display of the at least one user interface element when the target time is reached.

In some embodiments of the computer-readable medium, the target time is further based on the size of the user interface.

In some embodiments of the computer-readable medium, the command to animate comprises a command to display an alternate design for the at least one user interface element.

In some embodiments of the computer-readable medium, the input comprises a user tapping a touchscreen.

## BRIEF DESCRIPTION OF THE DRAWINGS

The accompanying drawings, which are incorporated in and constitute a part of this disclosure, illustrate several embodiments and aspects of the present disclosure, and together with the description, serve to explain certain principles of the presently disclosed embodiments.

FIG. 1 illustrates a flowchart of an example cascaded animation process, consistent with embodiments of the present disclosure.
FIG. 2 illustrates a diagram of an example user interface, consistent with embodiments of the present disclosure.
FIG. 3A illustrates a diagram of an example cascaded animation in a user interface, consistent with embodiments of the present disclosure.
FIG. 3B illustrates another diagram of an example cascaded animation in a user interface, consistent with embodiments of the present disclosure.
FIG. 3C illustrates a still further diagram of an example cascaded animation in a user interface, consistent with embodiments of the present disclosure.
FIG. 4 illustrates an example system for implementing embodiments of the present disclosure.

## DETAILED DESCRIPTION OF EXAMPLE EMBODIMENTS

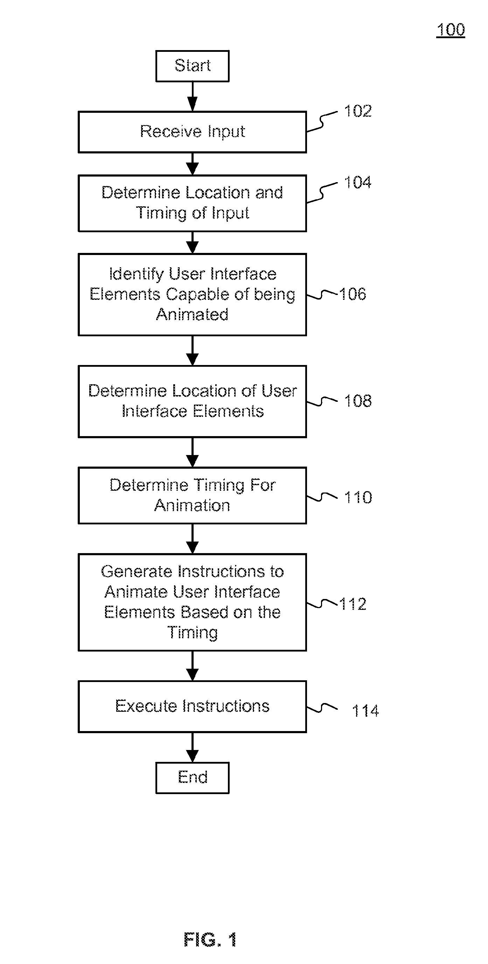

Embodiments of the present disclosure will now be described. Further embodiments are disclosed in FIGs. 1-4, which may be implemented together or individually.

Embodiments of the present disclosure are generally directed to systems, methods, and computer-readable media for generating cascaded user interface element animations based on a user input. According to certain embodiments, a user interface of a device is provided with at least one user interface element. For example, a smartphone having a touchscreen could display a row of icons. A user may provide input (e.g., tapping or pressing the touchscreen) at a particular location. In response to the user input, surrounding user elements are animated based on their spatial proximity to the user input, creating a "ripple" effect, for example. Other types of animation are also possible, such as those described below.

A user interface may include any human-computer interface that allows a user interact with a computing device, such as a graphical user interface (GUI). An example user interface may allow a user to control a computing device and receive feedback from a computing device. For example, a user interface may receive input from a user and provide output to a user. An example user interface may allow a user to enter data. For example, a user interface may include selectable numbers or a keyboard for entering a phone number in a computer. An example user interface may respond to user input. For example, a user interface may highlight text, responsive to a user selection. A user interface may include one or more user interface elements of various types.

A user interface element may be any part, portion, or component of a user interface. Example user interface elements include, for example, an icon, button, window, control, label, menu, menu item, text, text field, binary field, image, and/or video. A user interface element may identify an area to receive input from a user, provide output to a user, or a combination of the two. For example, a user interface may include an element to provide input, such as entering a number or pressing an arrow to increase a value (e.g., volume of system audio, contrast of a display, a scroll bar for a window, etc.). An example output user interface element may include, for example, a field to display data from sensors, such as a graph showing power consumption over time or displaying the time of day. User interface elements may act as mechanisms to both receive user input and provide output for a user. For example, an icon may be selectable by a user to launch a program. When the example icon is selected it may be highlighted by the interface (e.g., outlined, colored, bolded, etc.), providing confirmation to the user of the input that was received.

An example user interface element may be capable of being animated. In an embodiment, a user interface element may have a corresponding series of images that form an animation (e.g., a GIF). The animation may be played responsive to user input or system processes. For example, a wheel icon may represent a web browser application. When the device receives user input, it may animate the wheel (e.g., spin the wheel) to indicate that the device has received user input selecting the web browser application. In an embodiment, a user interface element may have an alternate display design. Animation may be provided by alternating the alternate display design with the primary display design for a period of time and/or with a certain frequency. For example, a weather application may have a cloud icon with an alternate display design of a sun icon. The display or rendering of the user interface element may be alternated between the sun icon design and cloud icon. In an embodiment, the alternate design may serve a function. For example, the alternate design may correspond to information to convey to a user. To illustrate this further, assume that the primary design of a weather application icon is to display the current weather. The alternate design may correspond to the forecast for a next period of time (e.g., hour, half-day, day, etc.). The processor may use a sun icon as the primary design when conditions are sunny. However, the processor may determine that the alternate design should be a rain cloud because the forecast calls for rain in the next hour. The animation may alternate between the sun (primary design) and the rain cloud (alternate design).

In an embodiment, when a user interface element does not have a corresponding animation, alternate design, or other specific means to distinguish itself, the user interface may provide a default animation. An example default animation may include the system alternating the display of the primary design with a display of generated alternate design, such as a negative image of the user interface element, a colored outline surrounding the user interface element, or a colored fill of the user interface element. For example, an icon may consist of a stylized "M" for an email application. The default animation may be to alternate the display of the alternate design with the display of the same stylized "M" in red.

In an embodiment, the animation may include replacing the primary design of the user interface element with an alternate design, without immediately re-displaying the primary design.

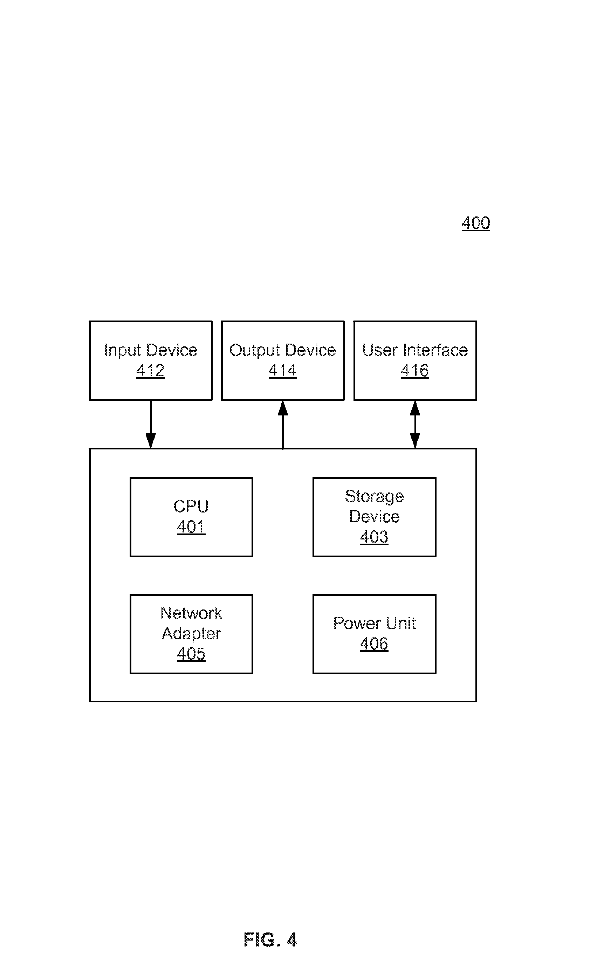

FIG. 1 illustrates a flowchart of an example cascaded animation process 100, consistent with embodiments of the present disclosure. As described below, example process 100 may be implemented with one or more of the components, such as those illustrated in FIG. 4. As will be appreciated from this disclosure, other arrangements and implementations are possible. Additionally, the process steps or operations of FIG. 1 may be performed using one or more processors, storage mediums, and user interfaces. It should be understood that the steps of process 100 may be performed in any order to achieve the objects of the disclosure. Accordingly, the depicted order of FIG. 1 is merely example and provided for purposes of illustration.

In step 102, a processor may receive input. In an embodiment, the input may correspond to a user input via an input device. For example, a user may select a location on a user interface by clicking a mouse or pressing a touchscreen. Other input devices may be used by a user, such as a trackball, keyboard, stylus, camera, microphone, or joystick, for example. For example, a user may press arrow keys on a keyboard to highlight a certain icon in a user interface. In an embodiment, an application may provide input, such as an application highlighting a particular user interface element. For example, a "how-to" tutorial application may provide input to the user interface to highlight a particular menu item. Any input that may be correlated to a location on a user interface may be used.

In step 104, the processor may determine the location and time of the input. The location may be coordinates identifying a location in a user interface. In an embodiment, the processor may determine the location of an input in the user interface. The input itself may be inherently tied to a location in a user interface, and the processor may identify the location of the input. For example, a user may provide input by pressing a touchscreen. The press input may take place at a certain location on the user interface portrayed on the touchscreen. The processor may determine and record the location of the press input as a pair of coordinates. In an embodiment, the processor may correlate a particular location in a user interface with the input. The input may not have an inherent location. For example, the input may include the user pressing the "A" key on a keyboard. The user interface may interpret "A" as being a shortcut for a particular application or the user interface may highlight an icon corresponding to a program or file starting with the letter "A." The processor may determine the location to be a center or centroid of the icon.

When an input is interpreted as selecting a user interface element, such as an icon, a center or centroid of the icon may be interpreted as the location of the input, rather than the location of the selection input itself, which may be located on the edge of the user interface element (e.g., off-center).

The time of the input may be the time (e.g.,

hours, minutes, seconds, and/or fraction of seconds) that the processor receives the input. For example, the processor may record that the touchscreen received a finger press at 9:01:58.65 AM. The time may take into account processing delay to record the time the input was initiated. For example, the processor may consider the time taken to depress the button on a mouse and the time taken for the processor to receive the corresponding mouse button signal in order to create the perception of a higher degree of responsiveness. In an embodiment the time may correspond to the start of a timer, so that subsequent events may be timed relative to the receipt of the input.

In step 106, the processor may identify user interface elements capable of being animated. In an embodiment, the processor may iterate through the user interface elements that may be suitable for animation. For example, the processor may analyze each icon and menu item on a home screen to determine if there is an existing animation for the user interface element or if an animation may be generated for the user interface element (e.g., generating a default alternate design as discussed above). The processor may generate a table of list of interface elements that may be animated as a result.

In an embodiment, each user interface element may, when it becomes visible in a user interface, may be recorded and along with its animation capabilities in a register or storage device. When the user interface element is no longer displayed, it may be removed from the register of user interface elements. These actions may be performed by the processor, the user interface, or the user interface element itself. Providing a register may facilitate the information used in step 106, such that the processor may identify using a table rather than iterating through each user interface element each time step 106 is performed. This may reduce processing workload and increase the perceived responsiveness of the user interface.

In step 108, the processor determines the location of the user interface elements to be animated. The location may be coordinates of the user interface element in the user interface. In an embodiment, the processor may determine the center or centroid of the user interface elements. For example, the processor may determine that the coordinates for the center of an icon are (200, 800), corresponding to the coordinates on the x-axis and the y-axis, respectively, in the user interface. The coordinates may be based on the resolution of the display used to provide the user interface. In another embodiment, the processor may determine the location to be the closest edge of the user interface element to the input location. The user interface element may self-define its location. For example, the properties of an icon may include its coordinates in the user interface.

In step 110, the processor may determine a timing for the animation of each user interface element. The timing may be based on the distance from the location of the user interface element to the location of the input, making all user interface elements located at the same distance from the input location to be animated at the same time. This may create a ripple effect, as the animations extend radially from the location of the input.

In an embodiment, the timing may be a linear function of the distance from the input location. For example, the timing may be calculated using the formula:

$$t_{target_i} = c d_i + t_{input}$$

where the target time for animating a user interface element ($t_{target_i}$) is calculated by summing the product of a constant (c) and the distance of the location of the user interface element from the location of the input ($d_i$) with the time of the input ($t_{input}$). The constant may be increased to provide a higher delay in initiating the user interface element animations. In an embodiment, the timing function used by the processor may be altered to have an exponential relationship function of the distance. For example, the timing may be calculated using the formula:

$$t_{target_i} = c^{d_i} + t_{input}$$

The process may calculate the timing using piecewise functions, such that all user interface elements that extend beyond a certain radius are all animated at the same time. The target timing functions may not be continuous. The processor may calculate the timing to be inverted, which may animate user interface elements that are farther away from the input location before closer user interface elements.

In step 112, the processor may generate instructions to animate the user interface elements based on the timing for each user interface element (e.g., the timing determined by the processor in step 110). The processor may generate a set of instructions, where each instruction identifies a user interface element, an animation for the user interface element, and a time to perform the animation. For example, an instruction may specify to animate a web browser icon (e.g., a wheel), by spinning the wheel at 12:01:54.50. The instructions may identify elements in groups, where elements that are intended to be animated at the same time (e.g., they are all located the same distance from the input location) are identified in a single instruction. Other instruction schemes may be used to identify user interface elements and their respective animation and timing.

In an embodiment, the processor may generate instructions to animate user interface elements based on the timing provided in step 110, as well as a relative direction of the user interface element location from the input location. The processor may determine that the input location is a certain angle from the location of the user interface element. For example, the processor may determine that input location is 112.5 degrees from a user interface element, where zero degrees is pointing to the top of the user interface and the degrees increase in the clockwise direction, similar to a compass. The relative direction may also be indicated more generally, such as a cardinal direction or a four quadrant organization. For example, the processor may determine that the input location is "East" of the location of the user interface element. Further divisions, such as eight quadrants or more, may be used to increase the precision of the relative direction (e.g., "East-Southeast"). The processor may then determine or select an animation based on the relative direction, such as an animation for when the input location is below (e.g., "South") the location of the user interface element and a separate animation for when the input location is above (e.g., "North") the location of the user interface element. For example, a square icon displayed on a touchscreen may have multiple animations, such as a swipe up, swipe down, swipe left, and swipe right. When the user taps the touchscreen below the location of the square icon, the processor may select a swipe up animation to simulate a ripple extending outward from the touchscreen tap location. However, a swipe down animation may be used to simulate a pull toward the tap location. In other examples, the animation may be perpendicular in orientation to the input location to create a spiral hurricane effect. Other effects may be achieved by coordinating the animation type and direction based on the distance and relative direction of the input location to the location of the user interface element. System defaults or user-controlled preferences may allow the animation timing and effects to be customized or altered.

An interface may be provided to allow the user to create effects controlling the type of animations used for the user interface elements and timing of the animations based on distance to the input location, the relative direction of the input location, and the type of user interface element. For example, a user may specify that all text fields fade up at a fixed time after an input, while icons may perform an animation extending outward from the input location, timed in a linear delay, to create a ripple.

In an embodiment, system default settings or user preferences may flag specific user interface element, a type of user interface elements, or a group of user interface elements, indicating that the processor should not animate them (e.g., they are exceptions to the user interface element animations). For example, a user may find a particular icon animation displeasing. The user may enter a flag in system preferences for the particular user interface element.

In step 114, the processor may execute instructions (e.g., the instructions generated in step 112). The instructions may cause the user interface to animate one or more user interface elements in accordance with the timing and type of animation indicated in the instructions.

For example, the user interface may animate a wheel icon by rotating it in accordance with instructions executed by the processor.

In some embodiments, the instruction to animate a particular user interface may be overridden by a flag exception stored in system settings or user preferences. For example, the processor may store user edits to system settings indicating that a text field should never be animated. The instruction to animate the text field may be blocked or otherwise not executed by the flag stored in system settings. The flag may be further overridden by an override instruction. For example, an instruction may include a command to ignore flags in system settings.

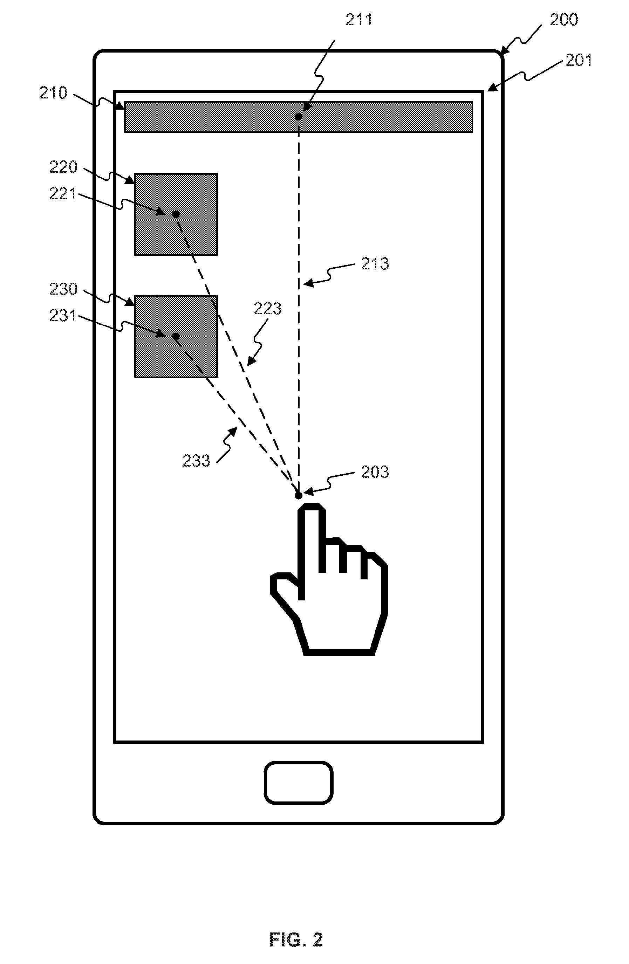

FIG. 2 illustrates a diagram of an example user interface, consistent with the embodiments of the present disclosure. System 200 may include user interface 201. User interface 201 may be a graphical user interface (GUI), including one or more user interface elements (e.g., header 210, first icon 220, and second icon 230). For example, user interface 201 may be the touchscreen of a smartphone including a status bar displaying the time, network signal strength, and battery life, as well as multiple icons to that may be selected to launch applications. The user interface may include other user interface elements, including those described above.

Each user interface element may have a center or centroid (e.g., header centroid 211, first icon centroid 221, and second icon centroid 231). The coordinates of the centroid of a user interface element may represent the location of the user interface element, such as the user interface element location used in the steps of process 100 described above. The centroid may be calculated by the processor or self-determined by the properties of the user interface element. For example, header 210 may include a list of properties that may include the coordinates of the centroid of the header. Other non-centroid coordinates may be used as the location of the user interface element for purposes of the processes and features described.

User interface 201 may receive input at input location 203. For example, a user may press a touchscreen and the location may be recorded by the touchscreen and sent to the processor in accordance with step 102 and step 104 of process 100. Other forms of input may be used, such as a stylus, mouse, keyboard, and a trackball, for example.

In accordance with step 106 of FIG. 1, the processor may identify header centroid 210, first icon 220, and second icon 230 as user interface elements in user interface 201. The process may determine header centroid 211, first icon centroid 221, and second icon centroid 231 as the locations of the corresponding user interface elements (step 108). The processor may calculate distance 213 from input location 203 to header centroid 211, as well as distance 223 and distance 233 (step 110). Processor may use distance 213 in calculating the timing for the animation of header 210. Similarly, distance 223 and distance 233 may be used in calculating the timing of the animation for their corresponding icons. For example, the timing for header 210 may be longer than the timing of first icon 220 (e.g., header 210 may be animated after first icon 220) because distance 213 is longer than distance 223. Similarly, the instruction for animating second icon 230 may be timed before the instruction to animate first icon 220 because distance 233 is shorter than distance 223. However, the timing function may time longer distance to animate prior to shorter distances.

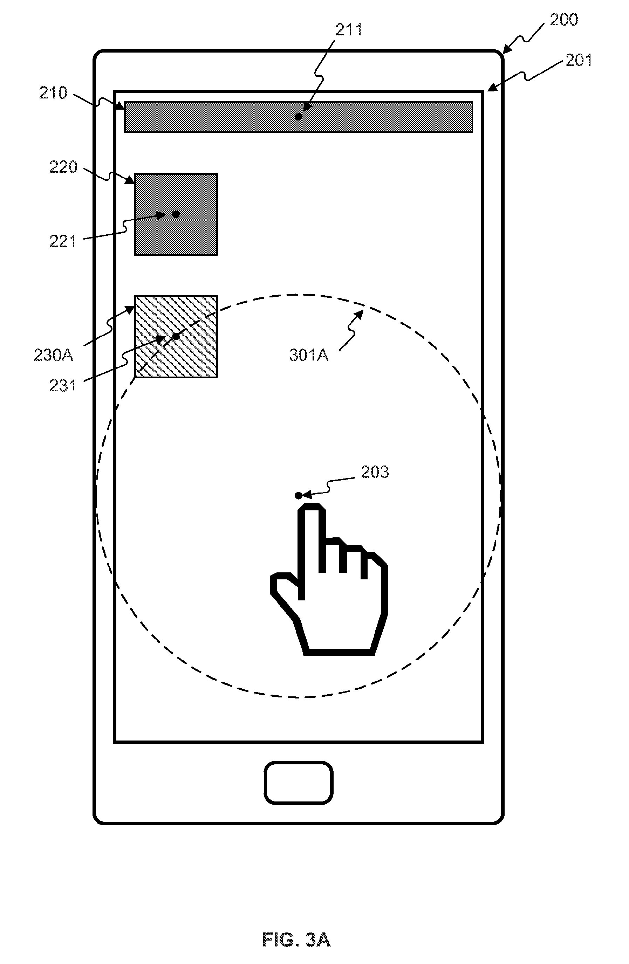

FIGs. 3A-3C illustrate example diagrams of a cascaded animation in a user interface, consistent with embodiments of the present disclosure. FIGs. 3A-3C may represent an example sequence of user interface element animations of a linear time delay function.

FIG. 3A depicts an example first diagram of a cascaded animation in user interface 201. Second icon centroid 231 of second icon 230 may be located at first event distance 301A. Because all points along first event distance 301A are equidistant, the processor may generate instructions to animate all user interface elements located at first event distance 301A at the same time, including, for example, animated second icon 230A.

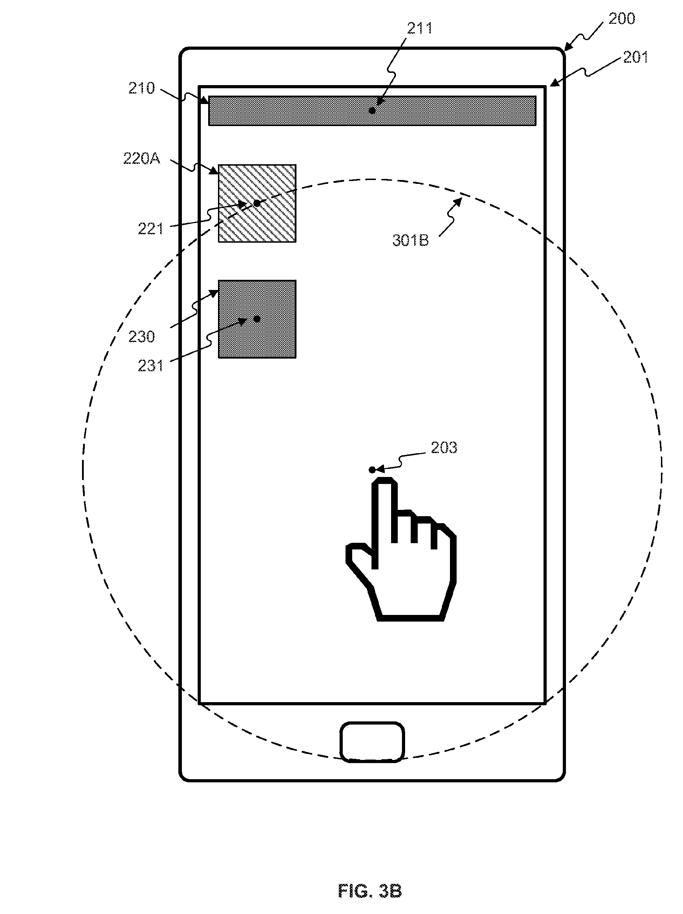

FIG. 3B depicts an example second diagram of a cascaded animation in user interface 201. First icon centroid 221 of first icon 220 may be located at second event distance 301 B. Because all points along second event distance 301 B are equidistant, the processor may generate instructions to animate all user interface elements located at second event distance 301 B at the same time, including, for example, animated first icon 220A. Because all points along second event distance 301 B are located farther from input location 203 than first event distance 301A, the processor may generate instructions to animate user interface elements along second event distance 301 B after the user interface elements along first event distance 301 A, for example.

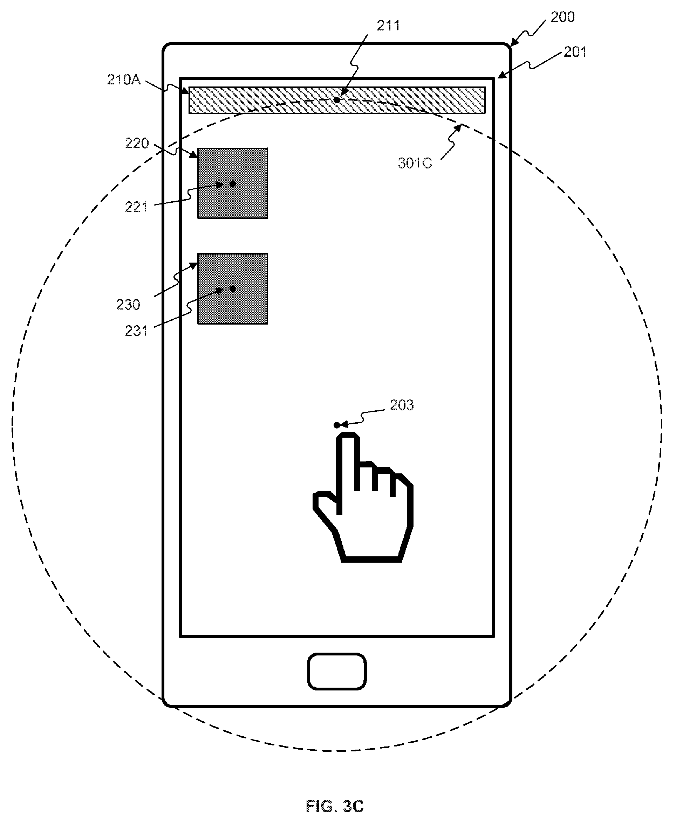

FIG. 3C depicts an example third diagram of a cascaded animation in user interface 201. Header centroid 211 of header 210 may be located at third event distance 301 C. Because all points along third event distance 301C are equidistant, the processor may generate instructions to animate all user interface elements located at third event distance 301C at the same time, including, for example, animated header 210A. Because all points along second event distance 301C are located farther from input location 203 than first event distance 301 B, the processor may generate instructions to animate user interface elements along second event distance 301C after the user interface elements along first event distance 301 B, for example.

In an embodiment, user interface elements with irregular shapes may be subdivided into smaller subelements that may be animated separately. The processor may determine that an edge of a user interface element is too far from the centroid of the user interface element, prompting the subdivision of the user interface element. For example, header 210 could be subdivided into thirds width-wise, with each subelement having a separate location (e.g., centroid) and animation. The processor may subdivide based on a predefined distance (e.g., pixels, centimeters, inches, etc.) of an edge from a centroid for the pre-subdivided user interface element. Example process 100 of FIG. 1 may be applied to each of the user interface subelements.

FIG. 4 illustrates an example system 400 for implementing embodiments consistent with the present disclosure. Variations of system 400 may be used for implementing components or devices of the disclosed embodiments. System 400 may be, for example, a desktop computer, a laptop computer, a tablet computer, a hybrid tablet-laptop, a smartphone, a wrist-held device, a set-top box, or a television. It will be appreciated that the components and features represented in FIG. 4 may be duplicated, omitted, or modified.

As shown in FIG. 4, example system 400 may include a central processing unit 401 (also referred to as an electronic processor or CPU) for managing and processing data, and performing operations, consistent with the present disclosure. (CPU 401 may be implemented as one or more processors.) System 400 may also include storage device 403. Storage device 403 may comprise optical, magnetic, signal, and/or any other type of storage device. System 400 may also include network adapter 405. Network adapter 405 may allow system 400 to connect to electronic networks, such as the Internet, a local area network, a wide area network, a cellular network, a wireless network, or any other type of network (not depicted in FIG. 4). System 400 also includes power unit 406, which may enable system 400 and its components to receive power and operate fully.

As shown in FIG. 4, system 400 may also include input device 412, which may receive input from users and/or modules or devices. Such modules or devices may include, but are not limited to, keyboards, mice, trackballs, track pads, scanners, cameras, and other devices which connect via Universal Serial Bus (USB), serial, parallel, infrared, wireless, wired, or other connections. System 400 also includes output device 414, which transmit data to users and/or modules or devices. Such modules or devices may include, but are not limited to, computer monitors, televisions, screens, projectors, printers, plotters, and other recording/displaying devices which connect via wired or wireless connections.

System 400 may include user interface 416, which may facilitate interaction with a user. Example user interfaces may include, for example, touch screens (e.g., a resistive or capacitive touchscreen), displays (e.g., a LCD monitor), LED arrays, or any other display.

In this disclosure, various embodiments have been described with reference to the accompanying drawings and embodiments. It will, however, be evident that various modifications and changes may be made thereto, and additional embodiments may be implemented, without departing from the present disclosure. The specification and drawings are accordingly to be regarded in an illustrative rather than restrictive sense.

For example, advantageous results may still be achieved if steps of the disclosed methods were performed in a different order and/or if components in the disclosed systems were combined in a different manner and/or replaced or supplemented by other components. Other implementations are also within the scope of the present disclosure.

It is to be understood that the foregoing general description provides examples and explanations only, and is not restrictive. Further, the accompanying drawings, which are incorporated in and constitute a part of this specification, illustrate embodiments of the present disclosure and together with the description, and are similarly not restrictive.

**Claims**

1. A computer-implemented system for generating a cascaded animation in a user interface, comprising:

   a memory device that stores instructions; and
   at least one processor that executes the instructions to:

   determine coordinates and an initial time for an input to the user interface, wherein the coordinates correspond to a spatial location of the input and the time corresponds to when the input was received;
   identify at least one user interface element capable of being animated;
   determine coordinates for the at least one user interface element corresponding to a spatial location of the at least one user interface element in the user interface;
   calculate a target time based on the initial time and distance between the coordinates of the input and the coordinates of the at least one user interface element; and
   generate a command to animate the display of the at least one user interface element when the target time is reached.

2. The computer-implemented system according to claim 1, wherein the target time is further based on the size of the user interface.

3. The computer-implemented system according to claim 1 or 2, wherein the command to animate comprises a command to display an alternate design for the at least one user interface element.

4. The computer-implemented system according to any one of the preceding claims, wherein the input comprises a user tapping a touchscreen.

5. The computer-implemented system according to any one of the preceding claims, wherein the instructions further cause the processor to:

   calculate a direction from the coordinates of the input to the coordinates of the at least one user interface element; and
   wherein the command further animates the display of the at least one user interface element based on the direction.

6. The computer-implemented system according to any one of the preceding claims, wherein the command is generated responsive to a determination that the at least one user interface element is not flagged for non-animation
and / or wherein the coordinates of the at least one user interface element correspond to a centroid of the at least one user interface element.

7. The computer-implemented system according to any one of the preceding claims, wherein the command includes a command for displaying a ripple effect on the user interface prior to animating the display of the at least one user interface element.

8. A method for generating a cascaded animation in a user interface, the method comprising the following operations performed by at least one processor:

   determining coordinates and an initial time for an input to the user interface, wherein the coordinates correspond to a spatial location of the input and the time corresponds to when the input was received;
   identifying at least one user interface element capable of being animated;
   determining coordinates for the at least one user interface element corresponding to a spatial location of the at least one user interface element in the user interface;
   calculating a target time based on the initial time and distance between the coordinates of the input and the coordinates of the at least one user interface element; and
   generating a command to animate the display of the at least one user interface element when the target time is reached.

9. The method according to claim 8, wherein the target time is further based on the size of the user interface.

10. The method according to claim 8 or 9, wherein the command to animate comprises a command to display an alternate design for the at least one user interface element.

11. The method according to any one of claims 8 to 10, wherein the input comprises a user tapping a touchscreen.

12. The method according to any one of claims 8 to 11, further comprising the following operations performed by at least one processor:

    calculating a direction from the coordinates of the input to the coordinates of the at least one user interface element; and
    wherein the command further animates the display of the at least one user interface element based on the direction.

13. The method according to any one of claims 8 to 12, wherein the command is generated responsive to a determination that the at least one user interface element is not flagged for non-animation
    and / or wherein the coordinates of the at least one user interface element correspond to a centroid of the at least one user interface element.

14. The method according to any one of claims 8 to 13, wherein the command includes a command for displaying a ripple effect on the user interface prior to animating the display of the at least one user interface element.

15. A non-transitory, computer-readable medium storing computer executable instructions that when executed by a computer will cause the computer to carry out a method according to any one of claims 8 to 14.

100

```
        ┌─────────┐
        │  Start  │
        └─────────┘
             │
             ▼
   ┌──────────────────────┐
   │    Receive Input     │────  102
   └──────────────────────┘
             │
             ▼
   ┌──────────────────────┐
   │ Determine Location and│────  104
   │    Timing of Input   │
   └──────────────────────┘
             │
             ▼
   ┌──────────────────────┐
   │ Identify User Interface│
   │ Elements Capable of being│───  106
   │      Animated        │
   └──────────────────────┘
             │
             ▼
   ┌──────────────────────┐
   │ Determine Location of User│──  108
   │  Interface Elements  │
   └──────────────────────┘
             │
             ▼
   ┌──────────────────────┐
   │  Determine Timing For │───  110
   │      Animation       │
   └──────────────────────┘
             │
             ▼
   ┌──────────────────────┐
   │ Generate Instructions to│
   │  Animate User Interface│
   │ Elements Based on the │───  112
   │       Timing         │
   └──────────────────────┘
             │
             ▼
   ┌──────────────────────┐
   │  Execute Instructions │───  114
   └──────────────────────┘
             │
             ▼
        ┌─────────┐
        │   End   │
        └─────────┘
```

FIG. 1

FIG. 2

FIG. 3A

FIG. 3B

FIG. 3C

400

| Input Device 412 | Output Device 414 | User Interface 416 |

CPU 401

Storage Device 403

Network Adapter 405

Power Unit 406

**FIG. 4**

Europäisches
Patentamt

European
Patent Office

Office européen
des brevets

## EUROPEAN SEARCH REPORT

Application Number

EP 15 17 3433

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/238690 A1 (ARRASVUORI JUHA HENRIK [FI] ET AL) 29 September 2011 (2011-09-29) <br> * figures 1-9 * <br> * paragraph [0021] * <br> * paragraph [0023] * <br> * paragraph [0030] - paragraph [0038] * <br> * paragraph [0050] - paragraph [0067] * <br> * paragraph [0074] * <br> * paragraph [0090] * <br> ----- | 1-15 | INV. <br> G06F3/0481 |
| X | US 2013/227450 A1 (NA MINWOOK [KR] ET AL) 29 August 2013 (2013-08-29) <br> * figures 1-14 * <br> * paragraph [0080] * <br> * paragraph [0088] - paragraph [0118] * <br> ----- | 1-15 | |
| X | US 2013/254693 A1 (OH JEONG WON [KR]) 26 September 2013 (2013-09-26) <br> * figures 1-14 * <br> * paragraph [0046] - paragraph [0072] * <br> ----- | 1-15 | |
| X | US 2009/289914 A1 (CHO SEON-HWI [KR]) 26 November 2009 (2009-11-26) <br> * figures 1-20 * <br> * paragraph [0177] - paragraph [0191] * <br> ----- | 1-15 | TECHNICAL FIELDS SEARCHED (IPC) <br><br> G06F |
| A | US 2005/235226 A1 (WATANABE JUN-ICHIRO [JP] ET AL) 20 October 2005 (2005-10-20) <br> * figures 1-14 * <br> * paragraph [0009] - paragraph [0013] * <br> * paragraph [0030] - paragraph [0071] * <br> ----- | 1-15 | |

The present search report has been drawn up for all claims

| Place of search | Date of completion of the search | Examiner |
|---|---|---|
| Munich | 6 November 2015 | Roth, Lucia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 15 17 3433

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2015

| Patent document cited in search report | | Publication date | Patent family member(s) | | Publication date |
|---|---|---|---|---|---|
| US 2011238690 | A1 | 29-09-2011 | NONE | | |
| US 2013227450 | A1 | 29-08-2013 | AU | 2013222955 A1 | 18-09-2014 |
| | | | CN | 103294394 A | 11-09-2013 |
| | | | EP | 2631779 A1 | 28-08-2013 |
| | | | KR | 20130097595 A | 03-09-2013 |
| | | | US | 2013227450 A1 | 29-08-2013 |
| | | | WO | 2013125911 A1 | 29-08-2013 |
| US 2013254693 | A1 | 26-09-2013 | CN | 101901103 A | 01-12-2010 |
| | | | EP | 2256608 A2 | 01-12-2010 |
| | | | KR | 20100127382 A | 06-12-2010 |
| | | | US | 2010306650 A1 | 02-12-2010 |
| | | | US | 2013254693 A1 | 26-09-2013 |
| US 2009289914 | A1 | 26-11-2009 | EP | 2124138 A2 | 25-11-2009 |
| | | | US | 2009289914 A1 | 26-11-2009 |
| US 2005235226 | A1 | 20-10-2005 | JP | 2005165491 A | 23-06-2005 |
| | | | US | 2005235226 A1 | 20-10-2005 |

EPO FORM P0459

For more details about this annex : see Official Journal of the European Patent Office, No. 12/82